# EUROPÄISCHE PATENTSCHRIFT

(11) **EP 3 162 183 B1**
(45) Veröffentlichungstag und Bekanntmachung des Hinweises auf die Patenterteilung: **18.08.2021**
(21) Anmeldenummer: 15192584.9
(22) Anmeldetag: 02.11.2015
(51) Int. Cl.: A01D 34/66, A01D 34/74

(54) **MÄH- ODER MULCHVORRICHTUNG**
MOWING OR MULCHING DEVICE
DISPOSITIF DE TONTE OU DE MULCHING

(43) Veröffentlichungstag der Anmeldung: 03.05.2017
(73) Patentinhaber: Maschinenfabrik Bermatingen GmbH & Co. KG, 88697 Bermatingen (DE)
(72) Erfinder: Ziegler, Peter, 88682 Salem (DE); Brugger, Bruno, 88048 Friedrichshafen (DE)
(74) Vertreter: Engelhardt, Volker

(56) Entgegenhaltungen:
- EP-A2- 1 405 556
- WO-A2-2011/136666
- DE-C1- 4 409 113
- DE-U1- 20 108 583
- US-A1- 2010 115 905
- US-B1- 8 166 735
- None

## Beschreibung

Die Erfindung bezieht sich auf eine Mäh- oder Mulchvorrichtung, durch die von einem Untergrund abstehende Vegetationen zwischen zwei benachbarten Reihen von Pflanzen, vorzugsweise in einer Plantage, abzuschneiden sind, nach dem Oberbegriff des Patentanspruches 1.

In der Landwirtschaft werden typischerweise Kultur- oder Nutzpflanzen in Reihen verlaufend angebaut, so dass zwischen den einzelnen Reihen der Pflanzen ein Abstand geschaffen ist, auf den Vegetationen, beispielsweise Grashalme, Löwenzahn oder sonstiges Grünzeug, wachsen, die von Arbeitsmaschinen befahren sind und in regelmäßigen zeitlichen Abständen zu mähen oder zu mulchen sind, um die Nährstoffe des Untergrundes nicht unnötig in diese Vegetation sondern in das Wachstum der benachbarten Pflanzen, beispielsweise Obstbäume, zu leiten.

Zwischen den einzelnen Reihen von Pflanzen ist eine Vegetation angepflanzt, um die Befahrbarkeit des Untergrundes durch die landwirtschaftliche Arbeitsmaschine zu verbessern, so dass keine Lehmfurchen oder sonstige Beschädigungen an dem Boden oder dem Wurzelwerk der Pflanzen beim Überfahren entstehen. Um die Nährstoffkonkurrenz zwischen den Pflanzen und der Vegetation zu verhindern, aber auch den Befall von Schädlingen, beispielsweise Wühlmäusen, rechtzeitig zu erkennen, muss die Vegetation in regelmäßigen Abständen gemäht bzw. gemulcht werden.

Derartige Mähgeräte bestehen üblicherweise aus einem oder mehreren parallel zu dem Untergrund rotierenden Schneidmessern, die als Sichelmäher oder Spindelmäher ausgebildet sein können. Derartige Mähgeräte sind auch häufig mit einer Vorrichtung zum Ausbringen von Pflanzenschutzmitteln oder Düngemitteln kombiniert und sind beispielsweise aus der DE 20 2008 583 U1 und der US 2010/0115905 A1 zu entnehmen. Derartige Mähgeräte schneiden die Vegetation zwischen zwei benachbarten Reihen von Pflanzen in einer vorgegebenen Schnitthöhe sowie -breite.

Es hat sich jedoch als nachteilig herausgestellt, dass sämtliche Vegetation zwischen den Pflanzenreihen abgeschnitten ist und somit auch die blütentreibende Vegetation entfernt ist. Die blütentreibende Vegetation ist jedoch nach ökologischen Gesichtspunkten für den Anbau von hochwertigen Pflanzen, insbesondere von Obstbäumen, wichtig, um Bienen und andere nützliche Insekten anzulocken, durch die die Blüten der Pflanzen oder Obstbäume besser bestäubt werden und um den Ertrag ökologisch zu steigern. Oftmals verhindert nämlich eine ausgewogene Vegetation Ungeziefer- und Bakterienbefall der Pflanzen, denn durch eine Vielzahl von unterschiedlichen Tieren werden solche Schädlinge gefressen und in der Anzahl gering gehalten. Aus der DE 44 09 113 C1 ist ein frontgetriebenes Trägerfahrzeug zu entnehmen, an dem seitlich zwei Traggestelle mit jeweils einem Schneidwerkzeug und ein mittleres an der Frontseite des Trägerfahrzeuges drehbar gelagertes, ein Schneidwerkzeug haltendes Traggestell beschrieben ist. Die beiden seitlichen Traggestelle können aus einer horizontalen in eine vertikale Position überführt werden, um das Trägerfahrzeug auf einer öffentlichen Straße bewegen zu können. Das mittlere Schneidwerkzeug wird im Transportzustand des Trägerfahrzeuges schräg angehoben. Nachteiligerweise weisen die drei Traggestelle lediglich eine Mähposition auf, die im Wesentlichen parallel zu dem Untergrund verläuft. Eine Höheneinstellung der drei-Schneidwerkzeuge bzw. der drei Traggestelle ist nicht vorgesehen, so dass die Pflanzen lediglich in einer vorgegebenen Höhe abgeschnitten werden.

Darüber hinaus kann die Mähvorrichtung nach DE 44 09 113 C1 zwischen zwei benachbarten Reihen von Pflanzen nicht eingesetzt werden, da insbesondere die beiden äußeren Traggestelle auskragen und folglich in Obstplantagen nicht einsetzbar sind. Das Mähwerk nach DE 44 09 113 C1 dient vielmehr dazu, möglichst großflächige Untergrundbereiche zu mähen, um mittels möglichst einer geringen Anzahl von Überfahren des Untergrundes eine möglichst große Fläche mähen zu können.

Es ist daher Aufgabe der Erfindung, eine Mäh- bzw. Mulchvorrichtung der eingangs genannten Gattung bereit zu stellen, mittels der zum einen die Vegetation zwischen zwei benachbarten Reihen von Pflanzen mähbar ist, wobei mittig ein Vegetationsstreifen erhalten bleibt und zum anderen die Vegetation an den Stirnseiten der Reihen von Pflanzen ohne einen verbleibenden Vegetationsstreifen zu mähen oder zu mulchen. Darüber hinaus soll der Vegetationsstreifen in einer vorgegebenen Höhe, vorzugsweise nach der Blüte auf dem Vegetationsstreifen, mäh- bzw. mulchbar sein.

Diese Aufgabe ist erfindungsgemäß durch die Merkmale des kennzeichnenden Teils des Patentanspruches 1 gelöst.

Weitere vorteilhafte Weiterbildungen der Erfindung ergeben sich aus den Unteransprüchen.

Dadurch, dass quer zur Bewegungsrichtung zwischen zwei Schneidwerkzeugen ein Freiraum vorgesehen ist, durch dessen Breite im Verfahrzustand auf dem Untergrund ein von der Vegetationsfläche abgetrennter Vegetationsstreifen entsteht, dass an dem Traggestell ein Haltegestänge befestigt ist, an dessen freien Ende ein drittes Schneidwerkzeug im Bereich des Vegetationsstreifens angeordnet ist und dessen Schnittbreite mindestens der Breite des Freiraumes zwischen den beiden äußeren Schneidwerkzeugen entspricht, und dass der Abstand zwischen dem dritten Schneidwerkzeug und dem Untergrund variabel mittels des Haltegestänges einstellbar ist, entstehen mindestens drei den jeweiligen Schneidwerkzeugen zugeordneten Vegetationsstreifen, in denen unterschiedliche hoch wachende Gräser, Blumen und dergleichen zur Bildung der Vegetationsfläche wachsen können. Auch das sogenannte Blütenkröpfen der Vegetation im mittleren Vegetationsstreifen ist möglich, um ein schnelles Ausbreiten von neuen Blüten zu erreichen.

Die drei Schneidwerkzeuge können ohne zeitliche Verzögerung während des Fahrzustandes auf ein identisches Niveau gebracht sein, so dass dann auch eine einheitliche hohe Vegetationsfläche entsteht.

Darüber hinaus ist es besonders vorteilhaft, wenn ein Motor die Schneidwerkzeuge an dem Traggestell und an dem Haltegestänge antreibt. Der Motor kann zusätzlich mit dem Haltegestänge gekoppelt sein, so dass durch den Motor der Abstand zwischen dem dritten Schneidwerkzeug und dem Untergrund variabel einstellbar ist, ohne dass weitere Antriebsmittel notwendig sind.

Weiterhin vorteilhaft ist, wenn das Haltegestänge als ein Parallelogramm-Gestänge ausgebildet ist, dessen eine Seite an dem Traggestell arretiert ist und die dazu parallel angeordnete Seite des Parallelogramm-Gestänges dem dritten Schneidwerkzeug zugeordnet ist, wodurch erreicht ist, dass das dritte Schneidwerkzeug permanent parallel zu dem Untergrund beweglich ist. Der Abstand zwischen dem dritten Schneidwerkzeug und dem Untergrund kann durch einen Druckkolben oder Linearantrieb einstellbar sein.

Die Schneidwerkzeuge können als Sichelmäher oder Spindelmäher ausgebildet sein, deren Messer horizontal oder vertikal zum Untergrund rotierend angeordnet sind.

An dem Traggestell kann vorteilhafterweise eine Dosiervorrichtung angeordnet sein, durch die Samen oder Dünger auf die Vegetation oder den Vegetationsstreifen aufbringbar ist. Dadurch können gezielt auf dem Vegetationsstreifen eine blütentragende Vegetation eingesät werden, wodurch Bienen und andere Insekten verstärk angelockt werden.

Die Mäh- bzw. Mulchvorrichtung kann ein Anbaugerät für eine landwirtschaftliche Arbeitsmaschine sein und der Motor der landwirtschaftlichen Arbeitsmaschine kann die Schneidwerkzeuge sowie den Abstand zwischen dem dritten Schneidwerkzeug und dem Untergrund einstellen.

Weiterhin vorteilhaft kann die Mäh- bzw. Mulchvorrichtung an eine landwirtschaftliche Arbeitsmaschine anhängbar sein. Der Motor kann der landwirtschaftlichen Arbeitsmaschine aber auch der Mäh- bzw. Mulchvorrichtung zugeordnet sein.

In der Zeichnung ist ein erfindungsgemäßes Ausführungsbeispiel dargestellt, das nachfolgend näher erläutert ist. Im Einzelnen zeigt:
- Figur 1: eine Mäh- bzw. Mulchvorrichtung, die als Anbaugerät an einer landwirtschaftlichen Arbeitsmaschine über einen mit einer Vegetation bewachsenen Untergrund in eine Bewegungsrichtung verfahren ist und aus einem Traggestell mit mehreren Schneidwerkzeugen besteht, an dem ein Haltegestänge mit einem höhenverstellbaren mittleren Schneidwerkzeug fest angeordnet ist, in Seitenansicht,
- Figur 2: die Mäh- bzw. Mulchvorrichtung gemäß Figur 1, zwischen zwei Reihen von Pflanzen beim Mähen bzw. Mulchen der Vegetation zur Erzeugung eines Vegetationsstreifens, in Ansicht von Hinten,
- Figur 3a: die Mäh- bzw. Mulchvorrichtung gemäß Figur 1 dessen mittleres Schneidwerkzeug durch das Haltegestänge von dem Untergrund abgehoben gehalten ist,
- Figur 3b: die Mäh- bzw. Mulchvorrichtung gemäß Figur 3a mit dem abgesenkten mittleren Schneidwerkzeug zum Mähen bzw. Mulchen der gesamten Vegetationsfläche, und
- Figur 4: die Mäh- bzw. Mulchvorrichtung gemäß Figur 1 mit einem seitlich verschwenkbaren Schneidwerkzeug zur Vergrößerung der Breite der Mäh- bzw. Mulchvorrichtung.

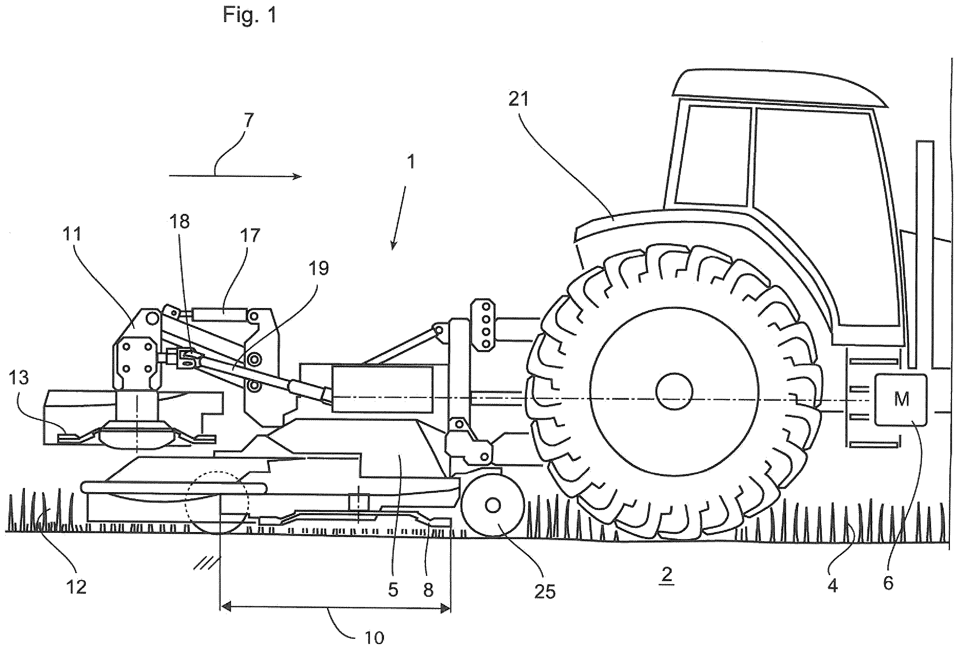

Der Figur 1 ist eine Mäh- bzw. Mulchvorrichtung 1, die an eine landwirtschaftliche Maschine 21 angebaut bzw. angehängt ist, zu entnehmen. Die Mäh- bzw. Mulchvorrichtung 1 ist durch die landwirtschaftliche Arbeitsmaschine 21 über einen Untergrund 2 in eine Bewegungsrichtung 7 bewegt und durch Stützräder 25 von diesem abgestützt. Auf dem Untergrund 2 wächst eine Vegetation 4, beispielsweise Grashalme, Wurzeln und sonstiges Grünzeug, zu dessen Bearbeitung an der Mäh- bzw. Mulchvorrichtung 1 mehrere durch Rotation angetriebene Schneidwerkzeuge 8, 9 und 13, die eine vorgegebene Schnittbreite 10 aufweisen, an einem Traggestell 5, wie nachfolgend näher erläutert, angeordnet sind.

Die beiden Schneidwerkzeuge 8 und 9 sind an dem Traggestell 5 abgestützt und bestehen im abgebildeten Ausführungsbeispiel aus mehreren an einer Welle angebrachten Schneidmessern, die im Wesentlichen parallel zu dem Untergrund 2 ausgerichtet sind. Durch die Rotation der Schneidmesser und aufgrund der Relativbewegung zwischen dem jeweiligen Schneidwerkzeug 8, 9 und dem Untergrund 2 entsteht ein abgeschnittener Vegetationsstreifen, dessen Schnittbreite 10 dem Durchmesser des jeweiligen Schneidwerkzeuges 8 bzw. 9 entspricht.

Zwischen den beiden äußeren Schneidwerkzeugen 8 und 9, die nämlich voneinander räumlich beabstandet sind, entsteht somit ein Freiraum 12, der von den beiden Schneidwerkzeugen 8 und 9 nicht überfahren ist.

Da das mittlere Schneidwerkzeug 13 an einem Haltegestänge 11 höhenverstellbar mit dem Traggestell 5 gekoppelt ist, kann dieses in unterschiedliche Positionen abgesenkt oder angehoben werden, so dass der Abstand zwischen dem Schneidwerkzeug 13 und dem Untergrund 2 frei wählbar einstellbar ist. Folglich kann das mittlere Schneidwerkzeug 13 entweder auf einer identischen Höhenposition wie die beiden äußeren Schneidwerkzeuge 8 und 9 oder auf einer unterschiedlichen Höhenposition zu diesen angeordnet sein. Somit entsteht in dem Freiraum 12 ein Vegetationsstreifen 14. In diesen Vegetationsstreifen 14 können Blumensamen ausgebracht werden, durch die entsprechende Blumen hervorsprießen. Die Blüten dieser Blumen in dem Vegetationsstreifen sollen Bienen und weitere nützliche Insekten anlocken, um die Pflanzen 3 zu bestäuben und von schädlichen Umwelteinflüssen, beispielsweise Viren, Bakterien oder Schädlingen, zu entfernen.

Die Schnittbreite 10 des Schneidwerkzeuges 13 ist dabei mindestens derart groß bemessen, dass diese zwischen den beiden Schnittbreiten 10 der äußeren Schneidwerkzeuge 8 und 9 verläuft. Es ist jedoch auch denkbar, dass das mittlere Schneidwerkzeug 13 in die jeweilige Schnittbreite 10 der äußeren Schneidwerkzeuge 8 und 9 eingreift, so dass sich diese teilweise überlappen.

Die Schneidwerkzeuge 8, 9, 13 der Mäh- bzw. Mulchvorrichtung 1 sind trieblich mit einem Motor 6, der in der landwirtschaftlichen Arbeitsmaschine 21 angeordnet ist, verbunden. Zwischen dem höhenverstellbaren dritten Schneidwerkzeug 13 und dem Traggestell 5 ist zur Übertragung der rotatorischen Antriebsleistung eine Teleskopwelle 19 angeordnet. Die Teleskopwelle 19 ist dabei mittels Kugelgelenken 18 kinematisch mit dem Traggestell 5 bzw. dem Motor 6 der landwirtschaftlichen Arbeitsmaschine 21 und dem dritten Schneidwerkzeug 13 gekoppelt.

Die triebliche Kopplung der Schneidwerkzeuge 8, 9, 13 mit dem Motor 6 in der Arbeitsmaschine 21 kann über eine Zapfwelle oder pneumatisch, hydraulisch oder elektrisch erfolgen. Auch kann das Haltegestänge 11 bzw. der Druckkolben 17 zur Verstellung des Haltegestänges 11 durch den Motor 6 erfolgen.

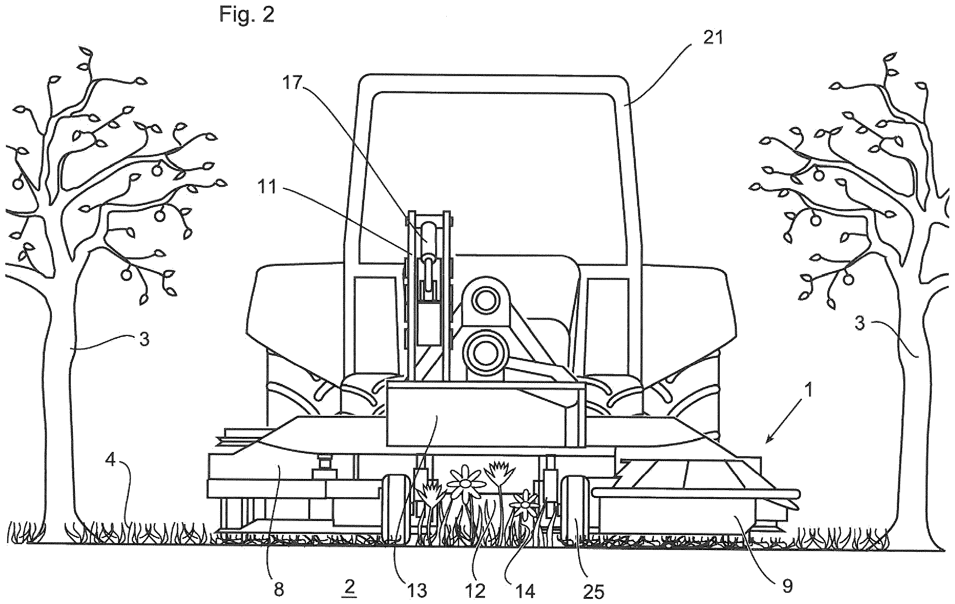

Der Figur 2 ist die Mäh- bzw. Mulchvorrichtung 1, die durch eine landwirtschaftliche Arbeitsmaschine 21 zwischen zwei Reihen von Pflanzen 3 zur Bearbeitung der Vegetation in Heckansicht zu entnehmen. Das erste Schneidwerk 8 und das zweite Schneidwerk 9 bilden jeweils die beiden äußeren Schneidwerke 8, 9, die die Vegetation 4 benachbart zu den Reihen von Pflanzen 3 schneidet bzw. mulcht.

Das erste Schneidwerk 8 und das zweite Schneidwerk 9 sind quer zur Bewegungsrichtung 7 durch einen Freiraum 12 voneinander beabstandet an dem Traggestell 5 positioniert, so dass die Vegetation 4 in dem Bereich des Freiraums 12 nicht durch die Schneidwerkzeuge 8, 9 bearbeitet ist. In der Bewegungsrichtung 7 nachgelagert ist in dem Bereich des Freiraums 12 das dritte Schneidwerkzeug 13 angeordnet. Durch das Haltegestänge 11 kann der Abstand des dritten Schneidwerkzeuges 13 zu dem Untergrund 2 derart eingestellt werden, dass die blütentreibende Vegetation 4 durch dieses nicht geschnitten ist. Die Schnittbreite 10 des dritten Schneidwerkzeuges 13 ist dabei größer bemessen als die Breite des Freiraumes 12, so dass die Schnittbreite 10 des dritten Schneidwerkzeuges 13 in Bewegungsrichtung 7 mit den Schnittbreite 10 des ersten und des zweiten Schneidwerkzeuges überlappen.

Bei dieser Arbeitsstellung der Mäh- bzw. Mulchvorrichtung 1 bleibt beim Durchfahren der Vegetation 4 zwischen zwei Reihen von Pflanzen 3 ein Vegetationsstreifen 14 erhalten, durch den beispielsweise Bienen oder andere Insekten zur Steigerung des Ertrages angelockt werden können.

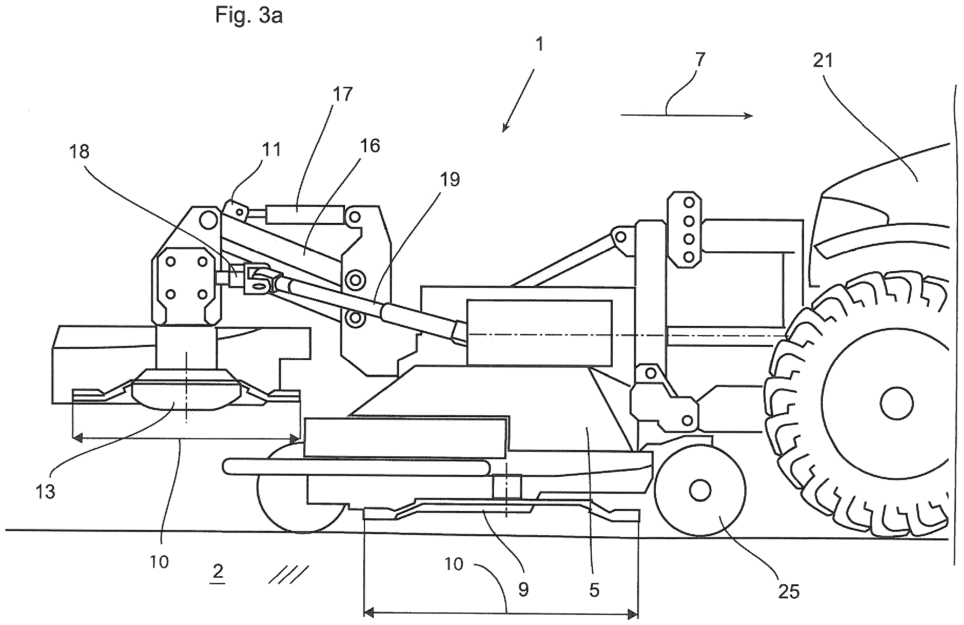

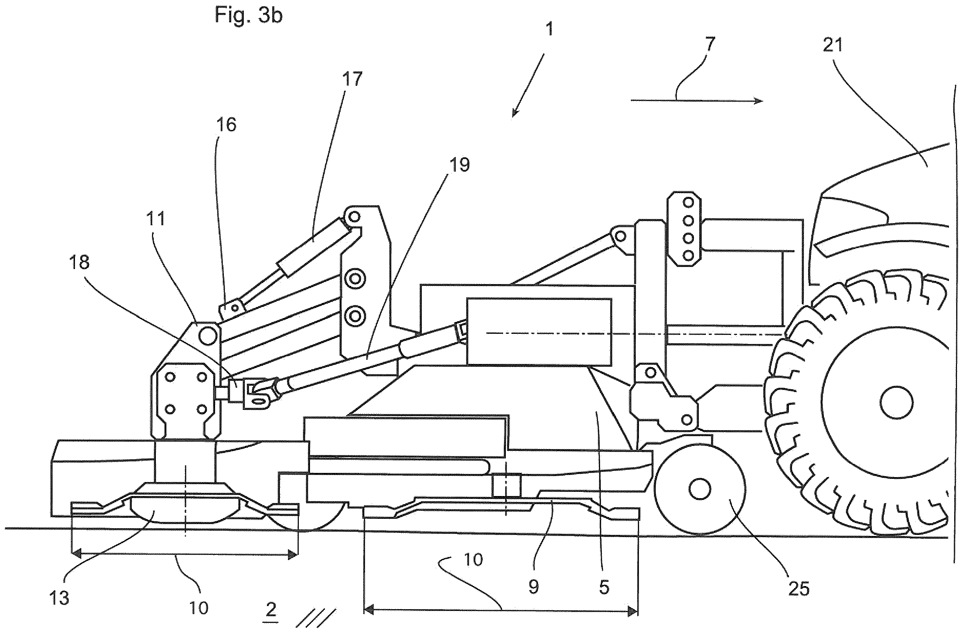

Diese Arbeitsstellung ist insbesondere der Figur 3a in einer Seitenansicht zu entnehmen. In der Figur 3b ist darüber hinaus die Mäh- bzw. Mulchvorrichtung 1 in einer weiteren Arbeitsstellung mit dem abgesenkten dritten Schneidwerkzeug 13 zu entnehmen. Durch das Zustellen des Druckkolbens 17 ist das dritte Schneidwerkzeug 13 an dem Parallelogramm-Haltegestänge 11 in Richtung des Untergrundes 2 verfahren. Die Teleskopwelle 19 und die Kugelgelenke 18 kompensieren die Längen- und Winkeländerung der Welle, die durch eine unterschiedliche Höhenstellung des dritten Schneidwerkzeuges 13 zu dem Untergrund 2 bedingt ist.

Das erste und das zweite Schneidwerkzeug 8, 9 und das dritte Schneidwerkzeug 13 schneiden somit die Vegetation 4 in einem vorgegebenen und identischen Abstand zu dem Untergrund 2 ab. Bei dieser Einstellung der Mäh- bzw. Mulchvorrichtung 1 ist die Vegetation 4 ohne die Bildung eines Vegetationsstreifens 14 bestellt. Diese Arbeitsstellung ist insbesondere für das Bestellen der gesamten Vegetation 4 zwischen zwei Reihen von Pflanzen 3 und an den Stirnseiten der Reihen von Pflanzen 3 von Vorteil. Die Mäh- und Mulchvorrichtung 1 ist somit auch für herkömmliche Mäh- bzw. Mulcharbeiten einsetzbar.

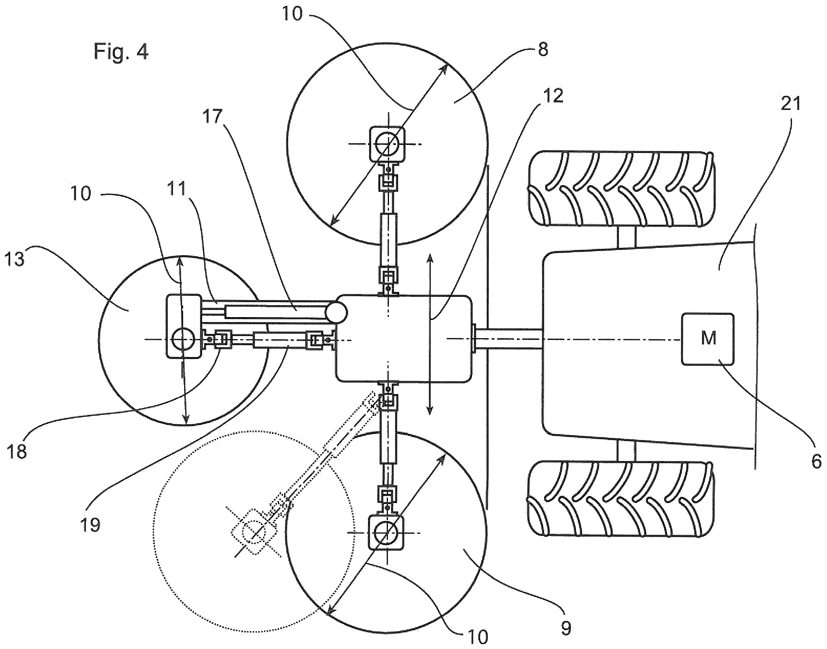

Der Figur 4 ist die Mäh- bzw. Mulchvorrichtung in Ansicht von oben zu entnehmen. Demnach ist das erste und/oder das zweite Schneidwerkzeug 8, 9 in der Ebene parallel und beabstandet zu dem Untergrund 2 schwenkbar, um die Breite der Mäh- bzw. Mulchvorrichtung an den Abstand zwischen den zwei Reihen von Pflanzen 3 anzupassen.

Die drei Schneidwerkzeuge 8, 9 und 13 sind typischerweise in einer Ebene parallel zu dem Untergrund 2 in einer dreieckform angeordnet, wobei vorzugsweise das dritte Schneidwerkzeug 13 in der Bewegungsrichtung 7 den Schneidwerkzeugen 8, 9 vor- bzw. nachgelagert ist.

Die Schneidwerkzeuge 8, 9, 13 können als Sichelmäher oder Spindelmäher ausgebildet sein. Jedes Schneidwerkzeug 8, 9 ,13 kann dabei aus mehreren Sichelmähern oder Spindelmähern gebildet sein.

Die landwirtschaftliche Arbeitsmaschine 21 kann die Mäh- bzw. Mulchvorrichtung 1 schieben oder ziehen wobei die Bewegungsrichtung 7 der landwirtschaftlichen Arbeitsmaschine 21 frei wählbar ist. Auch kann die Mäh- bzw. Mulchvorrichtung 1 ein Anhänger für eine landwirtschaftliche Arbeitsmaschine 21 sein. Der Motor 6 kann entweder der landwirtschaftliche Arbeitsmaschine 21 oder der Mäh- bzw. Mulchvorrichtung 1 zugeordnet sein. Auch kann die Mäh- bzw. Mulchvorrichtung 1 ein eigenständiges Fahrzeug, oder einen Unterbau eines solchen sein.

Die Mäh- bzw. Mulchvorrichtung 1 kann zusätzlich eine Dosiereinheit aufweisen, die Samen oder Dünger gezielt auf dem Vegetationsstreifen 14 aufbringt.

## Patentansprüche

1. Mäh- oder Mulchvorrichtung (1), durch die von einem Untergrund (2) abstehende Vegetation (4), die insbesondere zwischen zwei benachbarten Reihen von Pflanzen (3) eine Vegetationsfläche bildet, abzuschneiden sind, bestehend aus:
- einem in eine Bewegungsrichtung (7) verfahrbaren Traggestell (5),
- mindestens zwei an dem Traggestell (5) drehbar abgestützten Schneidwerkzeugen (8, 9), die parallel zu dem Untergrund (2) in einer einstellbaren Höhenposition angeordnet sind und durch die die Vegetation (4) jeweils in einer vorgegebene Schnittbreite (10) abschneidbar ist, und
- wobei das jeweilige Schneidwerkzeug (8, 9) durch einen Motor (6) einer landwirtschaftlichen Maschine in Rotation versetzbar ist,
wobei quer zur Bewegungsrichtung (7) zwischen dem ersten und dem zweiten Schneidwerkzeug (8, 9) ein Freiraum (12) vorgesehen ist, durch dessen Breite im Verfahrzustand auf dem Untergrund (2) ein von der Vegetationsfläche abgetrennter Vegetationsstreifen (14) entsteht, wobei an dem Traggestell (5) ein Haltegestänge (11) befestigt ist, an dessen freien Ende ein drittes Schneidwerkzeug (13) im Bereich des Vegetationsstreifens (14) angeordnet ist und dessen Schnittbreite (10) mindestens der Breite des Freiraumes (12) zwischen den beiden Schneidewerkzeugen (8, 9) entspricht, wobei der Abstand zwischen dem dritten Schneidewerkzeug (13) und dem Untergrund (2) variabel mittels des Haltegestänges (11) einstellbar ist, und wobei das dritte Schneidwerkzeug (13) an dem Haltegestänge (11) mit dem Motor (6) der landwirtschaftlichen Maschine mittels Kugelgelenken (18) und einer Teleskopwelle (19) koppelbar ist,
**dadurch gekennzeichnet,**
**dass** das erste und/oder das zweite Schneidwerkzeug (8, 9) in der Ebene parallel und beabstandet zu dem Untergrund (2) schwenkbar sind, derart, dass die Breite der Mäh- bzw. Mulchvorrichtung (1) an den Abstand zwischen den zwei Reihen von Pflanzen (3) anpassbar ist.

2. Mäh- bzw. Mulchvorrichtung (1) nach Anspruch 1,
**dadurch gekennzeichnet, dass** durch den Motor (6) der Abstand zwischen dem dritten Schneidewerkzeug (13) und dem Untergrund (2) variabel einstellbar ist.

3. Mäh- bzw. Mulchvorrichtung (1) nach Anspruch 1 oder 2,
**dadurch gekennzeichnet,**
**dass** das Haltegestänge (11) als einem Parallelogramm-Gestänge (11) ausgebildet ist, dass eine Seite des Parallelogramm-Gestänges (11) dem Traggestell (5) fest zugeordnet ist und die dazu parallel angeordnete Seite des Parallelogramm-Gestänges (11) dem dritten Schneidwerkzeug (13) zugeordnet ist.

4. Mäh- bzw. Mulchvorrichtung (1) nach einem der Ansprüche 1 bis 3,
**dadurch gekennzeichnet,**
**dass** der Abstand zwischen dem dritten Schneidewerkzeug (13) und dem Untergrund (2) durch einen Druckkolben (17) oder Linearantrieb einstellbar ist.

5. Mäh- bzw. Mulchvorrichtung (1) nach einem der Ansprüche 1 bis 4,
dass die Schneidwerkzeuge (8, 9, 13) als Sichelmäher oder Spindelmäher ausgebildet sind.

6. Mäh- bzw. Mulchvorrichtung (1) nach einem der Ansprüche 1 bis 5,
dass an dem Traggestell (5) eine Dosiervorrichtung angeordnet ist und dass durch die Dosiervorrichtung Samen oder Dünger auf die Vegetation (4) und/oder dem Vegetationsstreifen (14) aufbringbar ist.

7. Mäh- bzw. Mulchvorrichtung (1) nach einem der Ansprüche 1 bis 6,
**dadurch gekennzeichnet,**
**dass** das Mäh- bzw. Mulchvorrichtung (1) ein Anbaugerät für eine landwirtschaftlichen Arbeitsmaschine (21) ist, und dass der Motor (6) der landwirtschaftlichen Arbeitsmaschine (21) zugeordnet ist.

8. Mäh- bzw. Mulchvorrichtung (1) nach Anspruch 6,
**dadurch gekennzeichnet,**
**dass** der Abstand zwischen dem Untergrund (2) und der Mäh- bzw. Mulchvorrichtung (1) durch die Arbeitsmaschine (21) einstellbar ist

9. Mäh- bzw. Mulchvorrichtung (1) nach einem der Ansprüche 1 bis 5,
**dadurch gekennzeichnet,**
**dass** das Mäh- bzw. Mulchvorrichtung (1) an eine landwirtschaftliche Arbeitsmaschine (21) anhängbar ist.

10. Mäh- bzw. Mulchvorrichtung (1) nach einem der Ansprüche 1 bis 5,
**dadurch gekennzeichnet,**
**dass** das Mäh- bzw. Mulchvorrichtung (1) ein eigenständiges Fahrzeug ist.

11. Mäh- oder Mulchvorrichtung (1) nach Anspruch 1,
**dadurch gekennzeichnet, dass** das mittlere Schneidewerkzeug (13) in Bewegungrichtung in einer Ebene parallel und beabstandet zu den Schneidwerkzeugen (8, 9), die an dem Traggestell (5) abgestützt angeordnet sind, angeordnet ist.

## Claims

1. A mowing or mulching device (1) by means of which vegetation (4) projecting from an underground (2) and forming a vegetation surface, in particular between two neighbouring rows of plants (3), is to be cut off, consisting of:
- a support rack (5) movable in a movement direction (7),
- at least two cutting tools (8, 9) rotatably supported on the support rack (5), which are arranged in an adjustable height position parallel to the underground (2) and by means of which the vegetation (4) can be cut off respectively in a predetermined cutting width (10), and
- wherein the respective cutting tool (8, 9) can be caused to rotate by a motor (6) of an agricultural machine,
wherein between the first and the second cutting tool (8, 9) a space (12) is provided transversely to the movement direction (7), whose width, in the state of movement, creates a vegetation strip (14) on the underground (2) that is separate from the vegetation surface, wherein a support frame (11) is attached to the support rack (5) at the free end whereof a third cutting tool (13) is arranged in the region of the vegetation strip (14) and the cutting width (10) whereof at least corresponds with the width of the space (12) between the two cutting tools (8, 9), wherein the distance between the third cutting tool (13) and the underground (2) is variably adjustable by means of the support frame (11), and wherein the third cutting tool (13) can be coupled with the motor (6) of the agricultural machine at the support frame (11) by means of ball joints (18) and a telescopic shaft (19),
**characterised in that**
the first and/or the second cutting tool (8, 9) are pivotable in the plane parallel and spaced with respect to the underground (2), such that the width of the mowing or mulching device (1) is adjustable to the distance between the two rows of plants (3).

2. The mowing or mulching device (1) according to claim 1,
**characterised in that**
the distance between the third cutting tool (13) and the underground (2) is variably adjustable by means of the motor (6).

3. The mowing or mulching device (1) according to claim 1 or 2,
**characterised in that**
the support frame (11) is formed of a parallelogram frame (11), that one side of the parallelogram frame (11) is fixedly assigned to the support rack (5) and that the side of the parallelogram frame (11), which is parallel therewith, is assigned to the third cutting tool (13).

4. The mowing or mulching device (1) according to one of claims 1 to 3,
**characterised in that**
the distance between the third cutting tool (13) and the underground (2) is adjustable by means of a pressure piston (17) or a linear drive.

5. The mowing or mulching device (1) according to one of claims 1 to 4,
**characterised in that**
the cutting tools (8, 9, 13) are designed to be sickle mowers or reel mowers.

6. The mowing or mulching device (1) according to one of claims 1 to 5,
**characterised in that**
a dosing device is arranged at the support rack (5) and that seeds or fertilizer can be applied to vegetation (4) and/or the vegetation strip (14) by means of the dosing device.

7. The mowing or mulching device (1) according to one of claims 1 to 6,
**characterised in that**
the mowing or mulching device (1) is an add-on device for an agricultural work machine (21) and that the motor (6) is assigned to the agricultural work machine (21).

8. The mowing or mulching device (1) according to claim 6,
**characterised in that**
the distance between the underground (2) and the mowing or mulching device (1) is adjustable through the work machine (21).

9. The mowing or mulching device (1) according to one of claims 1 to 5,
**characterised in that**
the mowing or mulching device (1) is attachable to an agricultural work machine (21).

10. The mowing or mulching device (1) according to one of claims 1 to 5,
**characterised in that**
the mowing or mulching device (1) is an independent vehicle.

11. The mowing or mulching device (1) according to claim 1,
**characterised in that**
the middle cutting tool (13) is arranged, in the movement direction, in a plane parallel and spaced with respect to the cutting tools (8, 9) that are arranged to be supported at the support rack (5).

## Revendications

1. Dispositif de tonte ou de paillage (1) permettant de couper une végétation (4) saillant d'un sol (2) et formant une aire de végétation en particulier entre deux rangées de plantes voisines (3), comprenant :
- un support (5) se déplaçant dans un sens de marche (7),
- au moins deux outils de coupe (8, 9) s'appuyant de manière pivotante sur le support (5), qui sont disposés à une hauteur réglable parallèlement au sol (2) et qui permettent de couper la végétation (4) selon respectivement une largeur définie (10),
- l'outil de coupe respectif (8, 9) étant mis en rotation par un moteur (6) d'une machine agricole,
où, transversalement au sens de déplacement (7), il est prévu un espace libre (12) entre le premier et le deuxième outil de coupe (8, 9) qui, lors du déplacement sur le sol (2), produit une bande de découpe (14), où, sur le support (5), il est prévu une tringlerie de retient (11), l'extrémité libre de laquelle possède un troisième outil de coupe (13) disposé au niveau de la bande de découpe (14), et dont la largeur de coupe (10) correspond au moins à la largeur de l'espace libre (12) entre les outils de coupe (8, 9), l'écartement entre le troisième outil de coupe (13) et le sol (2) se laissant varier à l'aide de la tringlerie de retient (11), et où le troisième outil de coupe (13) sur la tringlerie de retient (11) se laisse accoupler à l'aide de rotules (18) et d'un arbre télescopique (19) au moteur (6) de la machine agricole
**caractérisé en ce que**
le premier et/ou le deuxième outil de coupe (8, 9) se laissent pivoter dans le plan parallèle au sol (2) et espacé de celui-ci, de sorte que la largeur du dispositif de tonte ou de paillage (1) puisse être adaptée à l'écartement entre les deux rangées de plante (3).

2. Dispositif de tonte ou de paillage (1) d'après la revendication 1,
**caractérisé en ce que**
le moteur (6) permet d'ajuster l'écartement entre le troisième outil de coupe (13) et le sol (2).

3. Dispositif de tonte ou de paillage (1) d'après la revendication 1 ou 2,
**caractérisé en ce que**
la tringlerie de retient (11) est conçue sous la forme d'une tringlerie en parallélogramme (11), qu'un côté de la tringlerie en parallélogramme (11) est assigné rigidement au support (5) et que le côté parallèle de la tringlerie en parallélogramme (11) est assigné au troisième outil de coupe (13).

4. Dispositif de tonte ou de paillage (1) d'après une des revendications 1 à 3,
**caractérisé en ce que**
l'écartement entre le troisième outil de coupe (13) et le sol (2) se laisse régler par un piston (17) ou par un actionneur linéaire.

5. Dispositif de tonte ou de paillage (1) d'après une des revendications 1 à 4,
**caractérisé en ce que**
les outils de coupe (8, 9, 13) sont conçus sous la forme d'une faucheuse ou d'une tondeuse à cylindre.

6. Dispositif de tonte ou de paillage (1) d'après une des revendications 1 à 5,
**caractérisé en ce que**
sur le support (5), il est prévu un dispositif de dosage permettant de distribuer de la semence ou de l'engrais sur la végétation (4) et/ou sur la bande de végétation (14).

7. Dispositif de tonte ou de paillage (1) d'après une des revendications 1 à 6,
**caractérisé en ce que**
le dispositif de tonte ou de paillage (1) est une unité auxiliaire pour une machine agricole (21) et que le moteur (6) est assigné à la machine agricole (21).

8. Dispositif de tonte ou de paillage (1) d'après la revendication 6,
**caractérisé en ce que**
l'écartement entre le sol (2) et le dispositif de tonte ou de paillage (1) se laisse ajuster par la machine agricole (21).

9. Dispositif de tonte ou de paillage (1) d'après une des revendications 1 à 5,
**caractérisé en ce que**
le dispositif de tonte ou de paillage (1) se laisse accrocher à une machine agricole (21).

10. Dispositif de tonte ou de paillage (1) d'après une des revendications 1 à 5,
**caractérisé en ce que**
le dispositif de tonte ou de paillage (1) est un véhicule autonome.

11. Dispositif de tonte ou de paillage (1) d'après la revendication 1,
**caractérisé en ce que**
dans le sens de déplacement, l'outil de coupe moyen (13) est disposé dans un plan parallèle et espacé des outils de coupe (8, 9) qui s'appuient sur le support (5).
